# EUROPÄISCHE PATENTANMELDUNG

(11) **EP 4 197 313 A1**
(43) Veröffentlichungstag der Anmeldung: **21.06.2023**
(21) Anmeldenummer: 22202746.8
(22) Anmeldetag: 20.10.2022
(51) Int. Cl.: A01F 15/08

(54) **RUNDBALLENPRESSE SOWIE VERFAHREN ZUM BESTIMMEN EINES DURCHMESSERS EINES RUNDBALLENS**

(30) Priorität: 14.12.2021 DE 102021133002
(71) Anmelder: Usines CLAAS France S.A.S, 57140 St. Rémy / Woippy (FR)
(72) Erfinder: Rongvaux, Laurent, 54800 Tronville (FR); Fuchs, Volker, 54439 Saarburg (DE); Grosnickel, Rémi, 57530 Colligny (FR)
(74) Vertreter: CLAAS Gruppe

(57) **Zusammenfassung**

Die vorliegende Erfindung betrifft eine Rundballenpresse (1), die ein Pressengehäuse (2), das zumindest ein feststehendes Gehäuseteil (3) und eine relativ zu dem feststehenden Gehäuseteil (3) zwischen einer Schießstellung und einer Öffnungsstellung schwenkbare Auswurfklappe (4) sowie eine Presskammer (5) umfasst, ein die Presskammer (5) umfangsseitig begrenzendes Pressmittel (6), das als Pressriemen ausgebildet oder aus einer Vielzahl von voneinander beabstandeten Pressrollen gebildet ist, zumindest eine Einrichtung zum Ummanteln eines in der Presskammer (5) gebildeten Rundballens mit einer Hülle und eine Sensoreinrichtung umfasst. Die Rundballenpresse (1) ist dadurch gekennzeichnet, dass die Sensoreinrichtung zumindest einen berührungslos arbeitenden Sensor (12) zum Bestimmen eines Durchmessers (D_{1,...,n}) des in der Presskammer (5) gebildeten Rundballens nach Verlassen der Presskammer (5) umfasst, der heckseitig an der Rundballenpresse (1) angeordnet ist.

## Beschreibung

Die vorliegende Anmeldung betrifft eine Rundballenpresse gemäß dem Oberbegriff des unabhängigen Patentanspruchs 1 sowie ein Verfahren gemäß dem Oberbegriff des unabhängigen Patentanspruchs 14.

Herkömmliche Rundballenpressen umfassen sogenannte Mittel zum Aufnehmen und Fördern von Erntegut, die das Erntegut im Betrieb der Rundballenpresse vom Boden einer landwirtschaftlichen Fläche aufnehmen und in eine Presskammer der Rundballenpresse fördern, in der das Erntegut zu einem Rundballen geformt wird. Ein Pressengehäuse solcher Rundballenpressen umfasst in der Regel ein feststehendes Pressengehäuseteil und eine relativ zu dem feststehenden Pressengehäuseteil schwenkbare Auswurfklappe. Die Presskammer der Rundballenpresse ist in dem Pressengehäuse ausgebildet, wobei die Rundballenpresse ein Pressmittel umfasst, das die Presskammer umfangsseitig begrenzt. Das Pressmittel kann als Pressriemen ausgebildet sein oder aus einer Vielzahl von voneinander beabstandeten Pressrollen gebildet werden. Mittels des Pressmittels wird das über die Mittel zum Aufnehmen und Fördern in die Presskammer gefördertes Erntegut zu einem Rundballen geformt. Zum Auswerfen des in der Presskammer geformten Rundballens wird die Auswurfklappe von einer Schließstellung in eine Öffnungsstellung verschwenkt. Herkömmliche Rundballenpressen umfassen weiterhin Einrichtungen zum Ummanteln des in der Presskammer gebildeten Rundballens mit einer Hülle, insbesondere einem Film bzw. einer Folie, einem Netz oder dergleichen.

Eine für den Benutzer der Rundballenpresse relevante Größe bei der Herstellung von Rundballen ist der Durchmesser der Rundballen. Normalerweise stellt der Benutzer der Rundballenpresse über eine Benutzerschnittstelle vor dem Betrieb der Rundballenpresse einen gewünschten Durchmesser ein, den der fertiggestellte Rundballen aufweisen soll. Im Idealfall soll jeder durch die Rundballenpresse gebildete Rundballen diesen Durchmesser aufweisen. Herkömmliche Rundballenpresse umfassen hierfür eine Sensoreinrichtung, die dazu eingerichtet ist, den Durchmesser des Rundballens in der Presskammer zu bestimmen. Basierend auf einer solchen Bestimmung können dann durch den Benutzer den Betrieb der Rundballenpresse beeinflussende Parameter eingestellt werden, sofern der in der Presskammer detektierte Durchmesser des Rundballens von der von dem Benutzer über die Benutzerschnittstelle vorgegebenen Zielgröße abweicht.

Aus der EP 3 106 020 B1 ist beispielsweise eine Rundballenpresse bekannt, die einen Sensor zur Erfassung der Größe eines im Ballenpressraum entstehenden Rundballens umfasst. Der Sensor ist dazu eingerichtet, eine Stützkraft zu erfassen, mit welcher sich eine mit dem Rundballen zusammenwirkende Walze am Rahmen der Rundballenpresse abstützt. Basierend auf der detektierten Stützkraft, die auf die Größe des Rundballens schließen lässt, kann die Steuerung von Funktionen der Rundballenpresse eingeleitet werden.

Aus der EP 2 9698 055 B1 ist weiterhin eine Rundballenpresse mit einem Entfernungssensor bekannt, der benachbart zu einer Spannvorrichtung der Rundballenpresse angeordnet und derart positioniert ist, dass er eine Position der Spannvorrichtung durch eine Messung der Entfernung zwischen dem Entfernungssensor und der Spannvorrichtung bestimmt. Die hieraus bestimmte Größe des in der Presskammer befindlichen Rundballens kann in einer Steuereinheit der Rundballenpresse weiterverwendet werden.

Nachteilig bei Rundballenpressen mit derartigen Sensoreinrichtungen zum Bestimmen einer Größe bzw. eines Durchmessers eines Rundballens ist jedoch, dass die Bestimmung der Größe bzw. des Durchmessers zu einem Zeitpunkt erfolgt, in dem sich der Rundballen noch in der Presskammer der Rundballenpresse befindet und Kontakt mit dem den Rundballen bildenden Pressmittel hat. Der zu diesem Zeitpunkt detektierte Durchmesser gibt demnach nicht den tatsächlichen Durchmesser an, den der Rundballen aufweist, wenn er auf der landwirtschaftlichen Fläche abgelegt ist. Dies liegt darin begründet, dass einige den Durchmesser des Rundballens beeinflussende Größen, wie etwa eine Ausdehnung des verdichteten Ernteguts im Rundballen beim Öffnen der Presskammer, zum Zeitpunkt der Messung noch nicht berücksichtigt werden können. Folglich weicht der Durchmesser des Rundballens, wenn dieser auf der landwirtschaftlichen Fläche abgelegt ist, oftmals erheblich von dem Durchmesser ab, den der Benutzer vor dem Betrieb der Rundballenpresse eingestellt hat.

Ausgehend von dem vorstehend genannten Stand der Technik ist es demnach die Aufgabe der vorliegenden Erfindung, eine Rundballenpresse anzugeben, die unabhängig von der Art und Zusammensetzung des als Rundballen gepressten Ernteguts und den Umgebungsbedingungen während des Betriebs der Rundballenpresse, eine Bestimmung eines tatsächlichen Durchmessers des Rundballens ermöglicht, also eines Durchmessers, den der Rundballen aufweist, wenn er auf einer landwirtschaftlichen Fläche abgelegt ist.

Diese Aufgabe wird erfindungsgemäß durch die Merkmale des unabhängigen Patentanspruchs 1 gelöst, wobei vorteilhafte Weiterbildungen der erfindungsgemäßen Rundballenpresse Gegenstand der entsprechenden abhängigen Patentansprüche 2 bis 13 sind.

Demnach betrifft die vorliegende Erfindung eine Rundballenpresse, die ein Pressengehäuse, das zumindest ein feststehendes Gehäuseteil und eine relativ zu dem feststehenden Gehäuseteil zwischen einer Schießstellung und einer Öffnungsstellung schwenkbare Auswurfklappe sowie eine Presskammer umfasst, ein die Presskammer umfangsseitig begrenzendes Pressmittel, das als Pressriemen ausgebildet oder aus einer Vielzahl von voneinander beabstandeten Pressrollen gebildet ist, zumindest eine Einrichtung zum Ummanteln eines in der Presskammer gebildeten Rundballens mit einer Hülle und eine Sensoreinrichtung umfasst. Die Rundballenpresse ist dadurch gekennzeichnet, dass die Sensoreinrichtung zumindest einen berührungslos arbeitenden Sensor zum Bestimmen eines Durchmessers des in der Presskammer gebildeten Rundballens nach Verlassen der Presskammer umfasst, der heckseitig an der Rundballenpresse angeordnet ist.

Durch die erfindungsgemäße Anordnung des zumindest einen Sensors heckseitig der Rundballenpresse ist es möglich den Durchmesser des in der Presskammer der Rundballenpresse gebildeten Rundballens zu bestimmen, nachdem der Rundballen die Presskammer verlassen hat bzw. aus der Presskammer ausgeworfen wurde. Mit anderen Worten, die erfindungsgemäße Anordnung des zumindest einen Sensors der Sensoreinrichtung an der Rundballenpresse ermöglicht es den tatsächlichen Durchmesser des Rundballens zu bestimmen, also den Durchmesser, den der Rundballen aufweist, wenn er auf der landwirtschaftlichen Fläche abgelegt ist.

Mittels einer sehr unkomplizierten Sensoranordnung kann demnach der tatsächliche Durchmesser eines Rundballens bestimmt und die Genauigkeit der Rundballenpresse im Betrieb in erheblichem Maße gesteigert werden.

Heckseitig angeordnet bedeutet in diesem Zusammenhang, dass der zumindest eine Sensor im Bereich des Hecks der Rundballenpresse angeordnet ist, so dass ein Detektionsbereich des zumindest einen Sensors derart ausgerichtet ist, dass der Rundballen nach Verlassen der Presskammer diesen Detektionsbereich des Sensors passiert.

Gemäß einer vorteilhaften Weiterbildung der Erfindung ist vorgesehen, dass die Rundballenpresse eine Steuereinheit umfasst, die mit dem zumindest einen Sensor der Sensoreinrichtung zur Übertragung von Daten verbunden ist, wobei die Steuereinheit dazu eingerichtet ist, den Durchmesser des gebildeten Rundballens aus Messwerten des zumindest einen Sensors zu bestimmen.

Eine Steuereinheit, die Teil der Rundballenpresse ist und mit dem zumindest einen Sensor in datenübertragender Art und Weise verbunden ist, erlaubt eine schnelle Verarbeitung der von dem zumindest einen Sensor der Sensoreinrichtung generierten Messwerte, also eine schnelle Bestimmung des tatsächlichen Durchmessers des Rundballens, so dass der Benutzer der Rundballenpresse zeitnah eine Rückmeldung bzw. Auskunft zum tatsächlichen Durchmesser des in der Rundballenpresse gebildeten Rundballens erhält und gegebenenfalls den Betrieb der Rundballenpresse beeinflussende Maßnahmen ergreifen kann.

Insbesondere ist der zumindest eine Sensor der Sensoreinrichtung dazu eingerichtet, einen ersten Messwert zu einem ersten Zeitpunkt und mindestens einen zweiten Messwert zu mindestens einem zweiten Zeitpunkt zu generieren, wobei der erste Messwert zum ersten Zeitpunkt einen Abstand zwischen dem zumindest einen Sensor und einem Referenzpunkt an der Rundballenpresse oder einer zu bearbeitenden landwirtschaftlichen Fläche und der mindestens eine zweite Messwert zum mindestens einen zweiten Zeitpunkt einen Abstand zwischen dem zumindest einen Sensor und der Mantelfläche des gebildeten Rundballens repräsentiert, wobei die Steuereinheit dazu eingerichtet ist, den Durchmesser des gebildeten Rundballens aus der Differenz des ersten Messwerts zum ersten Zeitpunkt und des mindestens einen zweiten Messwerts zum mindestens einen zweiten Zeitpunkt zu bestimmen.

Mit nur zwei Messwerten des zumindest einen Sensors, also einem Messwert zu einem Zeitpunkt nach Abschluss des Ballenbildungsvorgangs in der Presskammer, in dem sich noch kein Rundballen im Detektionsbereich des Sensors befindet, und einem Messwert zu einem Zeitpunkt, in dem sich ein Rundballen im Detektionsbereich des Sensors und demnach nicht mehr in der Presskammer befindet, und einer Verarbeitung dieser Messwerte mittels der Steuereinheit kann der tatsächliche Durchmesser des Rundballens sehr genau und in effizienter Art und Weise bestimmt werden.

Gemäß einer vorteilhaften Weiterbildung der Erfindung ist vorgesehen, dass die Steuereinheit dazu eingerichtet ist, den Durchmesser des gebildeten Rundballens mit einem vorabfestlegbaren Durchmesser zu vergleichen und bei einer detektierten Abweichung des Durchmessers des gebildeten Rundballens von dem vorabfestlegbaren Durchmesser den Ballenbildungsvorgang beeinflussende Parameter der Rundballenpresse und/oder einer landwirtschaftlichen Arbeitsmaschine, die mit der Rundballenpresse koppelbar ist, und/oder Parameter der zumindest einen Einrichtung zum Ummanteln des in der Presskammer gebildeten Rundballens einzustellen.

Durch diese Ausgestaltung wird ein geschlossener Regelkreis zur Überwachung des Durchmessers des in der Rundballenpresse erzeugten Rundballens geschaffen, so dass ein Benutzer während des Betriebs der Rundballenpresse keinerlei Anpassungen von den Ballenbildungsvorgang beeinflussenden Parametern der Rundballenpresse und/oder einer landwirtschaftlichen Arbeitsmaschine, die mit der Rundballenpresse koppelbar ist, und/oder Parametern der zumindest einen Einrichtung zum Ummanteln des in der Presskammer gebildeten Rundballens vornehmen muss. Vielmehr werden diese Parameter bei einer detektierten Abweichung vollautomatisch angepasst, so dass der tatsächliche Durchmesser des mittels der Rundballenpresse erzeugten Rundballens dem durch den Benutzer mittels einer Benutzerschnittstelle an der landwirtschaftlichen Arbeitsmaschine und/oder der Rundballenpresse vorabfestlegbaren Durchmesser stets entspricht.

Alternativ hierzu ist es möglich, dass die Steuereinheit bei einer detektierten Abweichung des von der Steuereinheit bestimmten Durchmessers des Rundballens von dem vorabfestlegbaren Durchmesser dem Benutzer, beispielsweise über eine Anzeigeeinrichtung in der landwirtschaftlichen Arbeitsmaschine, eine Hinweis hierauf gibt, so dass dieser die zuvor erwähnten Parameter manuell anpassen kann. Auch kann die Steuereinheit mittels der Anzeigeeinrichtung dem Benutzer Vorschläge für eine Anpassung der Parameter anzeigen, so dass dieser die Parameter nur noch entsprechend dem Vorschlag anpassen muss.

Gemäß einer vorteilhaften Weiterbildung der Erfindung ist vorgesehen, dass die Bestimmung des Durchmessers des gebildeten Rundballens automatisch erfolgt und zwar sobald die Auswurfklappe ihre Öffnungsstellung eingenommen hat.

Hierdurch muss der Benutzer der Rundballenpresse den Bestimmungsvorgang nicht manuell auslösen, sobald der Rundballenbildungsvorgang in der Presskammer abgeschlossen ist. Vielmehr kann der Fokus des Benutzers auf der Steuerung der landwirtschaftlichen Arbeitsmaschine liegen.

Gemäß einer vorteilhaften Weiterbildung der Erfindung ist vorgesehen, dass der zumindest eine Sensor der Sensoreinrichtung als Ultraschallsensor ausgebildet ist.

Hierdurch lässt sich die berührungslose Messung der Abstände besonders unkompliziert realisieren.

Alternativ zu der Ausgestaltung des Sensors als Ultraschallsensor ist es auch vorstellbar andere berührungslos arbeitende Sensoren zu verwenden, wie beispielsweise eine Kamera mit einem Verarbeitungsalgorithmus oder einen Infrarotsensor.

Gemäß einer vorteilhaften Weiterbildung der Erfindung ist vorgesehen, dass die Sensoreinrichtung mindestens zwei berührungslos arbeitende Sensoren umfasst, die voneinander in Querrichtung der Rundballenpresse beabstandet und auf gleicher Höhe angeordnet sind.

Hierdurch kann der tatsächliche Durchmesser des Rundballens an mindestens zwei Stellen der Mantelfläche des Rundballens bestimmt werden. Sofern eine Abweichung der Durchmesser voneinander an diesen Stellen durch die Steuereinheit detektiert wird, können ebenfalls die die Bildung des Rundballens in der Presskammer beeinflussenden Parameter angepasst werden, insbesondere die Parameter, die die Befüllung der Presskammer mit Erntegut beeinflussen.

Gemäß einer vorteilhaften Weiterbildung der Erfindung ist vorgesehen, dass die Rundballenpresse eine erste Einrichtung zum Ummanteln des in der Presskammer gebildeten Rundballens mit einem Netz oder einer Folie umfasst, wobei die erste Einrichtung zum Ummanteln innerhalb des Pressengehäuses angeordnet und dazu eingerichtet ist, den Rundballen in der Presskammer mit dem Netz oder der Folie zu ummanteln.

Vorzugsweise ist der zumindest eine Sensor der Sensoreinrichtung an der Auswurfklappe, vorzugsweise im Bereich einer sich in Querrichtung der Rundballenpresse erstreckenden Kante der Auswurfklappe, angeordnet.

Bei einer Rundballenpresse, die nur die innerhalb des Pressengehäuses angeordnete Einrichtung zum Ummanteln umfasst, kann mittels der Anordnung des zumindest einen Sensors an der Auswurfklappe, insbesondere im Bereich der Kante der Auswurfklappe, der tatsächliche Durchmesser des Rundballens bestimmt werden. Durch diese Anordnung des Sensors, ist der Sensor in der Öffnungsstellung der Auswurfklappe an einem heckseitig äußersten Bereich der Rundballenpresse positioniert und derart ausgerichtet, dass der Rundballen bei einem Auswurfvorgang aus der Presskammer den Detektionsbereich des Sensors passiert. Der erste Messwert des Sensors wird generiert sobald sich die Auswurfklappe in ihrer Öffnungsstellung befindet und sich der Rundballen noch nicht im Detektionsbereich des Sensors befindet. Der zweite Messwert des Sensors wird generiert sobald sich der im Auswurfvorgang befindende Rundballen im Detektionsbereich des Sensors befindet.

Insbesondere ist der Referenzpunkt durch einen Punkt einer den gebildeten Rundballen nach dem Verlassen der Presskammer kontaktierenden Oberfläche einer Ballenrampe der Rundballenpresse oder der Referenzpunkt durch die zu bearbeitende landwirtschaftliche Arbeitsfläche unmittelbar hinter der Ballenrampe der Rundballenpresse gebildet.

Gemäß einer vorteilhaften Weiterbildung der Erfindung ist vorgesehen, dass die Rundballenpresse eine zweite Einrichtung zum Ummanteln des in der Presskammer gebildeten Rundballens mit einer Folie umfasst, wobei die zweite Einrichtung zum Ummanteln als eine Wickelvorrichtung ausgebildet ist, die in einem Bereich hinter der Auswurfklappe der Rundballenpresse angeordnet und dazu eingerichtet ist, den gebildeten Rundballen nach Verlassen der Presskammer mit der Folie zu ummanteln.

Vorzugsweise ist der zumindest eine Sensor der Sensoreinrichtung an einer relativ zum Pressengehäuse feststehenden Rahmenstruktur der Wickelvorrichtung angeordnet.

Bei einer Rundballenpresse, die sowohl die innerhalb des Pressengehäuses angeordnete Einrichtung zum Ummanteln umfasst als auch eine Wickeleinrichtung, kann mittels der Anordnung des zumindest einen Sensors an der feststehenden Rahmenstruktur der Wickelvorrichtung der tatsächliche Durchmesser des Rundballens nach Verlassen der Presskammer bestimmt werden. Anders als bei der Rundballenpresse, die nur die innerhalb des Pressengehäuses angeordnete Einrichtung zum Ummanteln umfasst, kann bei dieser Ausgestaltung der tatsächliche Durchmesser des Rundballens in verschiedenen Zuständen des Rundballens bestimmt werden. So kann der Durchmesser vor einem Wickelvorgang in der Wickeleinrichtung, während eines Wickelvorgangs in der Wickelvorrichtung und/oder nach einem Wickelvorgang in der Wickelvorrichtung mittels des Sensors und der Steuereinheit bestimmt werden. Der erste Messwert des Sensors kann bei dieser Ausgestaltung bereits dann generiert werden, wenn der Rundballenbildungsvorgang in der Presskammer noch gar nicht abgeschlossen ist, er kann aber auch dann generiert werden, wenn sich die Auswurfklappe in ihrer Öffnungsstellung befindet. Wichtig ist lediglich, dass sich der Rundballen zum Zeitpunkt der ersten Messung noch nicht in der Wickelvorrichtung befindet. Der zweite Messwert des Sensors wird generiert, wenn sich der Rundballen in der Wickelvorrichtung im Detektionsbereich des Sensors befindet.

Insbesondere ist der Referenzpunkt durch einen Punkt einer den gebildeten Rundballen nach dem Verlassen der Presskammer kontaktierenden Oberfläche eines Wickeltischs der Wickelvorrichtung gebildet.

Gemäß einer vorteilhaften Weiterbildung der Erfindung ist vorgesehen, dass der zumindest eine Sensor der Sensoreinrichtung dazu eingerichtet ist, während einer Bewegung des gebildeten Rundballens in der Wickelvorrichtung eine Vielzahl von zweiten Messwerten zu einer Vielzahl von zweiten Zeitpunkten zu erzeugen, wobei die Steuereinheit dazu eingerichtet ist, aus der Vielzahl zweiter Messwerte zu der Vielzahl zweiter Zeitpunkte eine Zylindrizität und/oder einen mittleren Durchmesser des Rundballens zu bestimmen.

Durch die Bestimmung der Größen Zylindrizität und/oder mittlerer Durchmesser des Rundballens nach Verlassen der Presskammer kann eine noch präzisere Anpassung von den Ballenbildungsvorgang beeinflussenden Parametern der Rundballenpresse und/oder einer landwirtschaftlichen Arbeitsmaschine, die mit der Rundballenpresse koppelbar ist, und/oder Parametern der zumindest einen Einrichtung zum Ummanteln des in der Presskammer gebildeten Rundballens erfolgen.

Die erfindungsgemäße Aufgabe wird ferner durch ein Verfahren gemäß dem unabhängigen Patentanspruch 14 gelöst. Eine vorteilhafte Ausgestaltung ist dem abhängigen Patentanspruch 15 zu entnehmen.

Die vorliegende Erfindung wird nachstehend anhand der in den Figuren abgebildeten Ausführungsformen näher beschrieben.

Es zeigen:
- FIG. 1A:: eine schematische und exemplarische Ansicht einer ersten Ausführungsform einer erfindungsgemäßen Rundballenpresse;
- FIG. 1B:: eine schematische und exemplarische Ansicht einer zweiten Ausführungsform einer erfindungsgemäßen Rundballenpresse;
- FIG. 2A:: eine schematische und exemplarische Ansicht der ersten Ausführungsform der erfindungsgemäßen Rundballenpresse während einer Bestimmung eines ersten Messwerts zu einem ersten Zeitpunkt während des Betriebs der Rundballenpresse;
- FIG. 2B:: eine schematische und exemplarische Ansicht der ersten Ausführungsform der erfindungsgemäßen Rundballenpresse während einer Bestimmung eines zweiten Messwerts zu einem zweiten Zeitpunkt während des Betriebs der Rundballenpresse;
- FIG. 3A:: eine schematische und exemplarische Ansicht der zweiten Ausführungsform der erfindungsgemäßen Rundballenpresse während einer Bestimmung eines ersten Messwerts zu einem ersten Zeitpunkt während des Betriebs der Rundballenpresse;
- FIG. 3B:: eine schematische und exemplarische Ansicht der zweiten Ausführungsform der erfindungsgemäßen Rundballenpresse während einer Bestimmung eines zweiten Messwerts zu einem zweiten Zeitpunkt während des Betriebs der Rundballenpresse;
- FIG. 4A:: eine schematische und exemplarische Ansicht einer Weiterbildung der ersten Ausführungsform der erfindungsgemäßen Rundballenpresse;
- FIG. 4B:: eine schematische und exemplarische Ansicht einer Weiterbildung der zweiten Ausführungsform der erfindungsgemäßen Rundballenpresse;
- FIG. 5:: ein Diagramm, das eine Vielzahl von Messwerten eines Sensors einer Sensoreinrichtung der erfindungsgemäßen Rundballenpresse gemäß der zweiten Ausführungsform zu einer Vielzahl von Zeitpunkten darstellt; und
- FIG. 6:: eine weitere schematische und exemplarische Ansicht der erfindungsgemäßen Rundballenpresse.

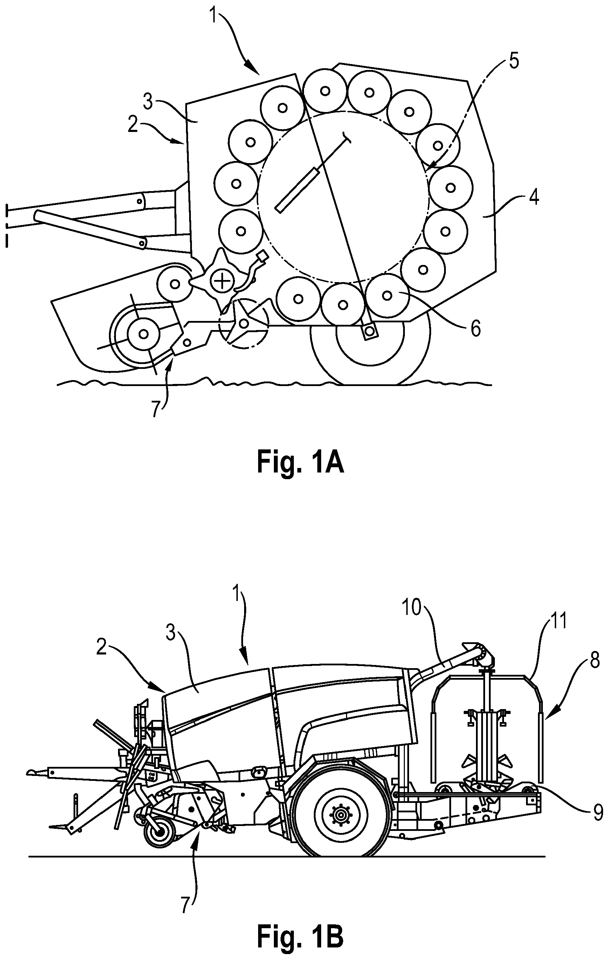

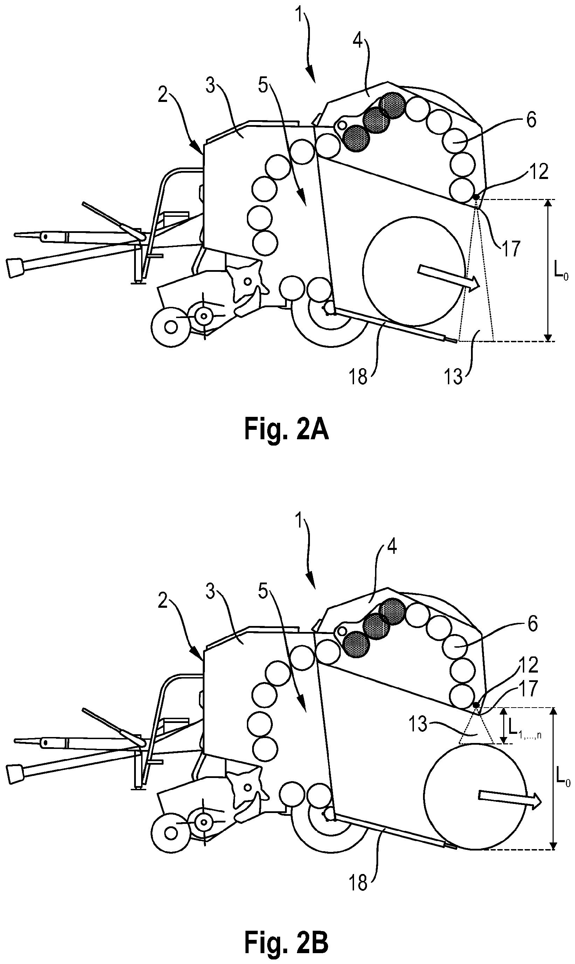

Die FIGs. 1A und 1B zeigen eine schematische und exemplarische Darstellung einer ersten und einer zweiten Ausführungsform der erfindungsgemäßen Rundballenpresse 1. Die Rundballenpressen 1 umfassen jeweils ein Pressengehäuse 2, das wiederum ein feststehendes Gehäuseteil 3 und eine relativ zu dem feststehenden Gehäuseteil 3 schwenkbare Auswurfklappe 4 umfasst. Die Auswurfklappe 4 ist zwischen einer Schließstellung und einer Öffnungsstellung relativ zum feststehenden Gehäuseteil 3 schwenkbar, wobei eine Bewegung der Auswurfklappe 3 zwischen der Schließstellung und der Öffnungsstellung zum Öffnen oder Schließen einer in dem Pressengehäuse 2 ausgebildeten Presskammer 5 führt. Eine Schließstellung der Auswurfklappe 4 ist beispielsweise in der FIG. 1A dargestellt, eine Öffnungsstellung in der FIG. 2A. In FIG. 1B sind die Auswurfklappe 4 sowie die Presskammer 5 durch das feststehende Gehäuseteil 3 der Rundballenpresse 1 verdeckt und somit nicht sichtbar. Das Pressengehäuse 2, insbesondere das feststehende Gehäuseteil 3, ist auf einem Fahrgestell angeordnet und mit diesem verbunden, über das die Rundballenpresse 1 wiederum mit einer in den FIGs. nicht dargestellten landwirtschaftlichen Arbeitsmaschine, insbesondere einem Traktor, gekoppelt werden kann, so dass die landwirtschaftliche Arbeitsmaschine die Rundballenpresse 1 im Betrieb auf einer landwirtschaftlichen Fläche bewegt.

Die in dem Pressengehäuse 2 ausgebildete Presskammer 5 wird von einem Pressmittel 6 umfangsseitig begrenzt. Das Pressmittel 6 kann als Pressriemen ausgebildet sein oder aber von einer Vielzahl von voneinander beabstandet angeordneten Pressrollen gebildet werden. Während des Betriebs der Rundballenpressen 1 wird mithilfe von sogenannten Mitteln 7 zum Aufnehmen und Fördern von Erntegut Erntegut von der landwirtschaftlichen Fläche aufgenommen und in die Presskammer 5 gefördert, wobei mittels des Pressmittels 6 aus dem in die Presskammer 5 geförderten Erntegut ein Rundballen geformt bzw. gebildet wird. Die Mittel 7 zum Aufnehmen und Fördern von Erntegut umfassen zumindest eine sogenannte Pick-Up, mit deren Hilfe das Erntegut von der landwirtschaftlichen Fläche aufgenommen wird, und einen Rotor, mit dessen Hilfe das aufgenommene Erntegut der Presskammer 5 zugeführt wird.

Die Rundballenpresse 1 gemäß der ersten und zweiten Ausführungsform umfasst jeweils eine Einrichtung zum Ummanteln des in der Presskammer 5 gebildeten Rundballens mit einer Hülle, die im Folgenden auch als eine erste Einrichtung zum Ummanteln bezeichnet wird. Diese erste Einrichtung zum Ummanteln ist innerhalb des Pressengehäuses 2 angeordnet und dazu eingerichtet, den Rundballen in der Presskammer 5 entweder mit einem Netz oder mit einem Film bzw. einer Folie als Hülle zu ummanteln.

Bei der in FIG. 1B dargestellten Rundballenpresse 1 gemäß der zweiten Ausführungsform ist neben der zuvor erwähnten ersten Einrichtung zum Ummanteln des in der Presskammer 5 gebildeten Rundballens mit einer Hülle eine weitere Einrichtung zum Ummanteln des in der Presskammer 5 gebildeten Rundballens mit einer Hülle vorhanden, die im Folgenden auch als zweite Einrichtung zum Ummanteln bezeichnet wird. Diese zweite Einrichtung zum Ummanteln ist in einem Bereich der Rundballenpresse 1 ausgebildet bzw. angeordnet, der sich hinter der Auswurfklappe 4 befindet. Die zweite Einrichtung zum Ummanteln ist als sogenannte Wickelvorrichtung 8 ausgebildet bzw. ausgestaltet und dazu eingerichtet, den in der Presskammer 5 gebildeten Rundballen nach Verlassen der Presskammer mit einem Film bzw. einer Folie zu ummanteln bzw. zu umhüllen. Bei der in FIG. 1B dargestellten zweiten Ausführungsform der Rundballenpresse 1 ist die innerhalb des Pressengehäuses 2 angeordnete erste Einrichtung zum Ummanteln lediglich dazu eingerichtet, den Rundballen innerhalb der Presskammer 5 mit einem Netz zu ummanteln. Die als Wickelvorrichtung 8 ausgebildete zweite Einrichtung zum Ummanteln umfasst einen Wickeltisch 9, auf dem der Rundballen nach Verlassen der Presskammer 5 kontinuierlich um seine Rotationsachse, eine durch die Mittelpunkte der Stirnflächen des Rundballens verlaufende Symmetrieachse, gedreht werden kann, um diesem mit dem Film bzw. der Folie zu ummanteln. Die Wickelvorrichtung 8 umfasst weiterhin eine feststehende Rahmenstruktur 10, an dem ein die Film- bzw. Folienrolle tragender Arm 11 drehbeweglich angeordnet bzw. befestigt ist, so dass dieser bei einem Wickelvorgang des Rundballens nach Verlassen der Presskammer 5 um den sich auf dem Wickeltisch 9 um seine Rotationsachse drehenden Rundballen rotieren und diesen mit der Folie bzw. dem Film versehen kann.

Erfindungsgemäß umfasst die Rundballenpresse 1 eine Sensoreinrichtung, die zumindest einen berührungslos arbeitenden Sensor 12 umfasst. Der zumindest eine Sensor 12 ist dazu eingerichtet, einen Durchmessers D_{1,...,n} des in der Presskammer 5 gebildeten Rundballens nach Verlassen der Presskammer 5 zu bestimmen. Hierzu ist der zumindest eine Sensor 12 heckseitig an der Rundballenpresse 1, also in einem hinteren Bereich der Rundballenpresse 1, angeordnet. Der Sensor 12 ist insbesondere derart heckseitig an der Rundballenpresse angeordnet, dass der Rundballen nach Verlassen der Presskammer 5 einen Detektionsbereich 13 des zumindest einen Sensors 12 passiert.

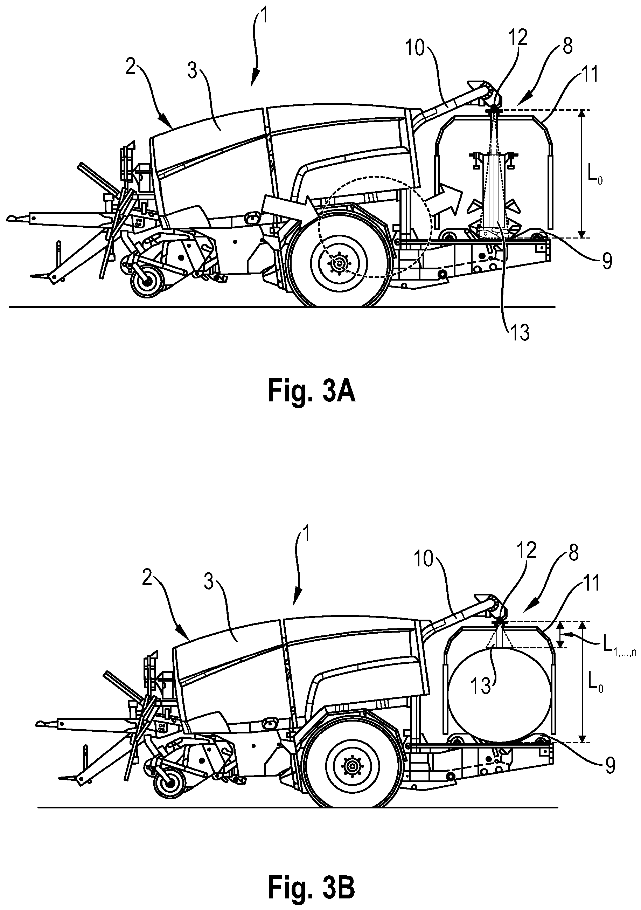

Damit der Durchmesser D_{1,...,n} des in der Presskammer 5 gebildeten Rundballens nach Verlassen der Presskammer 5 bestimmt werden kann, ist der Sensor 12 dazu eingerichtet, Messwerte nach Abschluss eines Ballenbildungsvorgangs in der Presskammer 5 zu generieren bzw. zu erzeugen. Der Sensor 12 ist insbesondere dazu eingerichtet, einen ersten Messwert zu einem ersten Zeitpunkt t₀ zu generieren, wobei sich der Rundballen zu diesem ersten Zeitpunkt t₀ noch nicht in dem Detektionsbereich 13 des Sensors 12 befindet (FIGs. 2A und 3A). Der erste Messwert repräsentiert demnach einen Abstand L₀ zwischen dem Sensor 12 und einem Referenzpunkt, wobei der Referenzpunkt durch die Rundballenpresse 1 oder aber durch die landwirtschaftliche Fläche, insbesondere unmittelbar hinter der Rundballenpresse 1, ausgebildet wird. Der Sensor 12 ist weiterhin dazu eingerichtet, mindestens einen weiteren Messwert (d.h., mindestens einen zweiten Messwert) zu mindestens einem weiteren Zeitpunkt t_{1,...,n} (d.h., mindestens einem zweiten Zeitpunkt) zu generieren, wobei sich der Rundballen zu diesem zweiten Zeitpunkt t_{1,...,n} im Detektionsbereich 13 des Sensors 12 befindet (FIGs. 2B und 3B). Der mindestens eine zweite Messwert repräsentiert demnach einen Abstand L_{1,...,n} zwischen dem Sensor 12 und der Mantelfläche des Rundballens.

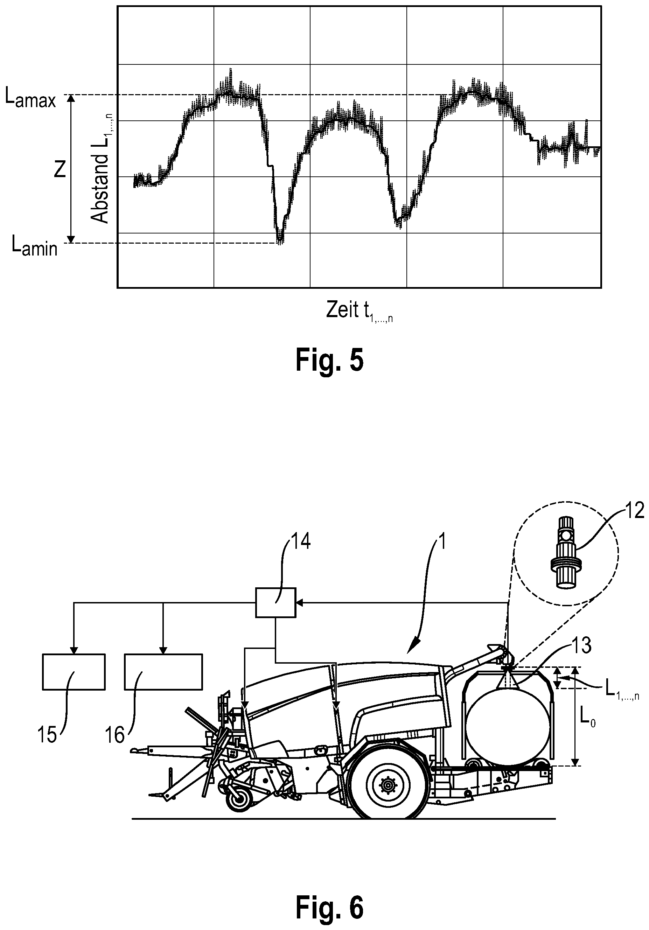

Die Rundballenpresse 1 umfasst weiterhin eine Steuereinheit 14, die in FIG. 6 beispielhaft bei einer Rundballenpresse 1 gemäß der zweiten Ausführungsform dargestellt ist. Die Steuereinheit 14 ist mit dem zumindest einen Sensor 12 der Sensoreinrichtung zur Übertragung von Daten, wie den zuvor beschriebenen Messwerten, verbunden. Die Steuereinheit 14 ist ferner mit weiteren Mitteln und Einrichtungen der Rundballenpresse 1 zur Übertragung von Daten verbunden, wie beispielsweise den Mitteln 7 zum Aufnehmen und Fördern von Erntegut, den Einrichtungen zum Ummanteln der Rundballen mit einer Hülle sowie dem die Presskammer 5 umfangsseitig begrenzenden Pressmittel 6. Darüber hinaus kann die Steuereinheit 14 mit Steuereinheiten 15 oder Anzeigeeinrichtungen 16 der landwirtschaftlichen Arbeitsmaschine an die die Rundballenpresse 1 in ihrem Betrieb gekoppelt ist, zur Übertragung von Daten verbunden sein. Die von der Steuereinheit 14 erhaltenen und erzeugten Daten können mittels einer Anzeigeeinrichtung 16 einem Benutzer angezeigt werden und an eine Steuereinheit 15 der landwirtschaftlichen Arbeitsmaschine übermittelt werden.

Die Steuereinheit 14 ist dazu eingerichtet, den Durchmesser D_{1,...,n} des Rundballens nach Verlassen der Presskammer 5 zu bestimmen. Hierzu greift die Steuereinheit 14 auf die Messwerte des zumindest einen Sensors 12 der Sensoreinrichtung zurück, die der Sensor 12 der Steuereinheit 14 übermittelt. Die Steuereinheit 14 bestimmt den Durchmesser D_{1,...,n} des Rundballens indem sie eine Differenz aus dem Messwert zum ersten Zeitpunkt t₀ und dem mindestens einen zweiten Messwert zum mindestens einen zweiten Zeitpunkt t_{1,...,n} bildet, also eine Differenz aus dem Abstand L₀ und dem mindestens einen Abstand L_{1,...,n} (D_{1,....,n} = L₀ - L_{1,...,n}).

Die Steuereinheit 14 ist weiterhin dazu eingerichtet, den Durchmesser D_{1,...,n} des Rundballens nach Verlassen der Presskammer 5 mit einem Durchmesser D₀ zu vergleichen, der von einem Benutzer der Rundballenpresse 1 vor dem Betrieb der Rundballenpresse 1 festgelegt und in einer mit der der Steuereinheit 14 verbundenen Speichereinrichtung hinterlegt werden kann. Sofern eine Abweichung zwischen dem mittels des Sensors 12 und der Steuereinheit 14 bestimmten Durchmesser D_{1,...,n} und dem vorabfestlegbaren Durchmesser D₀ von der Steuereinheit 14 detektiert wird, ist diese dazu eingerichtet, den Betrieb der Rundballenpresse 1, insbesondere den in der Presskammer 5 ablaufenden Ballenbildungsvorgang, beeinflussende Parameter der Rundballenpresse 1 und/oder der landwirtschaftlichen Arbeitsmaschine, die im Betrieb der Rundballenpresse 1 mit dieser gekoppelt ist, und/oder den Betrieb der Einrichtungen zum Ummanteln des in der Presskammer 5 gebildeten Rundballens einzustellen bzw. anzupassen. Hierdurch ist es möglich den Durchmesser weiterer mittels der Rundballenpresse 1 erzeugten Rundballen in Übereinstimmung mit dem vorabfestlegbaren bzw. vorabfestgelegten Durchmesser D₀ zu halten. Mittels des zumindest einen Sensors 12 der Sensoreinrichtung sowie der Steuereinheit 14 ist somit eine Anpassung des Ballendurchmessers in Form eines geschlossenen Regelkreises, einer sogenannten "closed loop"-Regelung, während des Betriebs der Rundballenpresse 1 möglich.

Die zuvor beschriebene Bestimmung des Durchmessers D_{1,...,n} des gebildeten Rundballens nach Verlassen der Presskammer 5 erfolgt bei der Rundballenpresse 1 gemäß der ersten Ausführungsform und der zweiten Ausführungsform gleichermaßen. Die Bestimmung erfolgt vorzugsweise automatisch und zwar sobald die Auswurfklappe 4 ihre Öffnungsstellung eingenommen hat. Grundsätzlich ist es aber auch denkbar, die Bestimmung manuell durch den Benutzer auszulösen, sobald der Ballenbildungsvorgang in der Presskammer 5 abgeschlossen ist.

Die Rundballenpresse 1 gemäß der ersten Ausführungsform unterscheidet sich von der Rundballenpresse 1 gemäß der zweiten Ausführungsform weiterhin dahingehend, dass der zumindest eine Sensor 12 der Sensoreinrichtung heckseitig der Rundballenpresse an einer anderen Position bzw. einer anderen Komponente der Rundballenpresse 1 angeordnet ist.

Bei der Rundballenpresse 1 gemäß der ersten Ausführungsform (FIGs. 1A, 2A und 2B) ist der zumindest eine Sensor 12 an der Auswurfklappe 4 der Rundballenpresse 1 angeordnet bzw. befestigt. Der Sensor 12 ist insbesondere im Bereich einer sich in Querrichtung der Rundballenpresse 1 erstreckenden Kante 17 der Auswurfklappe 4 angeordnet, wobei der Detektionsbereich 13 des Sensors 12 in der Öffnungsstellung der Auswurfklappe 4 derart ausgerichtet ist, dass der Rundballen nach dem Verlassen der Presskammer 5 den Detektionsbereich 13 passiert. Der für die Bestimmung des Abstands L₀ zum ersten Zeitpunkt t₀ relevante Referenzpunkt wird durch eine Ballenrampe 18 der Rundballenpresse 1, insbesondere auf einer Oberfläche der Ballenrampe 18, die den Rundballen nach dem Verlassen der Presskammer 5 kontaktiert, oder aber durch die landwirtschaftliche Fläche unmittelbar hinter der Ballenrampe 18 ausgebildet.

Bei der Rundballenpresse 1 gemäß der zweiten Ausführungsform (FIGs. 1B, 3A und 3B) ist der zumindest eine Sensor 12 hingegen an der Rahmenstruktur 10 der Wickelvorrichtung 8 angeordnet bzw. befestigt. Der Detektionsbereich 13 des Sensors 12 ist hierbei in Richtung des Wickeltischs 9 der Wickelvorrichtung 8 gerichtet, so dass sich der Rundballen sobald er sich auf dem Wickeltisch 9 der Wickelvorrichtung 8 befindet im Detektionsbereich 13 des Sensors 12 befindet. Hierbei wird der für die Bestimmung des Abstands L₀ zum ersten Zeitpunkt t₀ relevante Referenzpunkt durch den Wickeltisch 9 der Wickelvorrichtung 8, insbesondere auf einer den Rundballen kontaktierenden Oberfläche des Wickeltischs 9, ausgebildet.

Wie bereits beschrieben, dreht sich der Rundballen auf dem Wickeltisch 9 der Wickelvorrichtung 8 sobald er sich auf diesem befindet. Der in der Presskammer 5 gebildete Rundballen kann somit in der Wickelvorrichtung 8 mit einem Film bzw. einer Folie ummantelt werden. Die Tatsache, dass sich der Rundballen auf dem Wickeltisch 9 um seine Rotationsachse bewegt, führt dazu, dass bei der zweiten Ausführungsform der Rundballenpresse 1 die Bestimmung des Durchmessers D_{1,...,n} in verschiedenen Zuständen des Rundballens erfolgen kann, nämlich vor einem Wickelvorgang in der Wickelvorrichtung 8, während eines Wickelvorgangs in der Wickelvorrichtung 8 und/oder nach Abschluss eines Wickelvorgangs in der Wickelvorrichtung 8. Weiterhin ist es bei dieser Ausführungsform möglich eine Vielzahl von zweiten Messwerten zu einer Vielzahl von zweiten Zeitpunkten t_{1,...,n} zu generieren bzw. zu erzeugen, da sich der Rundballen sobald er sich auf dem Wickeltisch 9 befindet um seine Rotationsachse dreht. Der Sensor 12 kann während des Rotationsvorgangs des Rundballens im Wesentlichen kontinuierlich Messwerte erzeugen, die jeweils einen Abstand L_{1,...,n} repräsentieren. Es ist beispielsweise vorstellbar, dass der Sensor 12 pro Grad Drehung des Rundballens auf dem Wickeltisch 9 einen Messwert generiert bzw. erzeugt. Die Steuereinheit 14 ist dazu eingerichtet, aus der Vielzahl zweiter Messwerte eine Funktion des Abstands L_{1,...,n} zu bestimmen. Die Steuereinheit 14 kann weiterhin dazu eingerichtet sein, die Differenz des absoluten Minimums Lₐₘᵢₙ und des Maximums Lₐₘₐₓ dieser Funktion während einer Umdrehung des Rundballens auf dem Wickeltisch 9 zu bestimmen, die die Zylindrizität Z des Rundballens repräsentiert (FIG. 5).

Weiterhin kann die Steuereinheit 14 dazu eingerichtet sein, den Durchmesser D_{1,...,n} des gebildeten Rundballens zu jedem zweiten Zeitpunkt t_{1,...,n} während einer Umdrehung des Rundballens auf dem Wickeltisch 9 zu bestimmen, die Summe aus diesen Durchmessern D_{1,...,n} zu bilden und durch die Anzahl an Messwerten während einer Drehung des Rundballens auf dem Wickeltisch 9 zu dividieren, so dass sich ein mittlerer Durchmesser Dₘ des Rundballens bestimmen lässt.

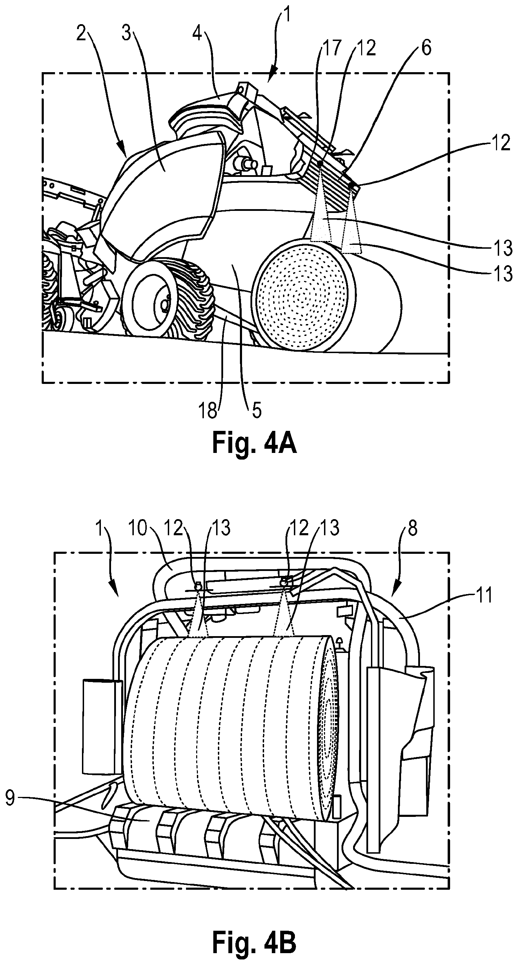

Gemäß einer Ausgestaltung der erfindungsgemäßen Rundballenpressen 1 kann die Sensoreinrichtung nicht nur einen Sensor 12 umfassen, sondern zwei oder auch mehr Sensoren 12. Die Sensoren 12 sind dabei in Querrichtung der Rundballenpresse 1 voneinander beabstandet und auf gleicher Höhe angeordnet. Bei einer Ausgestaltung der Sensoreinrichtung mit zwei Sensoren 12, die wie zuvor beschrieben angeordnet sind, lassen sich Messwerte an zwei Stellen der Mantelfläche des Rundballens generieren, so dass der Durchmesser D_{1,...,n} an zwei voneinander in Richtung der Rotationsachse des Rundballens beabstandeten Stellen der Mantelfläche bestimmt werden kann. Vorzugsweise sind die beiden Sensoren 12 derart voneinander in Querrichtung beabstandet an der Rundballenpresse 1 angeordnet, dass der Durchmesser D_{1,...,n} jeweils in einem an die Stirnflächen des Rundballens angrenzenden Bereich der Mantelfläche des Rundballens erfolgt. Die zuvor beschriebene Weiterbildung der erfindungsgemäßen Rundballenpresse ist in den FIGs. 4A und 4B dargestellt.

Der zumindest eine berührungslos arbeitende Sensor 12 der Sensoreinrichtung ist vorzugsweise als Ultraschallsensor ausgebildet. Andere berührungslos arbeitende Sensoren, wie beispielsweise eine Kamera mit einem Verarbeitungsalgorithmus, ein Infrarotsensor oder dergleichen, können jedoch ebenfalls Verwendung finden.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Rundballenpresse
- 2: Pressengehäuse
- 3: feststehendes Gehäuseteil
- 4: Auswurfklappe
- 5: Presskammer
- 6: Pressmittel
- 7: Mittel zum Aufnehmen und Fördern von Erntegut
- 8: Wickelvorrichtung
- 9: Wickeltisch
- 10: Rahmenstruktur der Wickelvorrichtung
- 11: Arm der Wickelvorrichtung
- 12: Sensor der Sensoreinrichtung
- 13: Detektionsbereich des Sensors
- 14: Steuereinheit
- 15: Steuereinheit einer landwirtschaftlichen Arbeitsmaschine
- 16: Anzeigeeinrichtung einer landwirtschaftlichen Arbeitsmaschine
- 17: Kante der Auswurfklappe
- 18: Ballenrampe

## Patentansprüche

1. Rundballenpresse (1), die Folgendes umfasst:
- ein Pressengehäuse (2), das zumindest ein feststehendes Gehäuseteil (3) und eine relativ zu dem feststehenden Gehäuseteil (3) zwischen einer Schießstellung und einer Öffnungsstellung schwenkbare Auswurfklappe (4) sowie eine Presskammer (5) umfasst;
- ein die Presskammer (5) umfangsseitig begrenzendes Pressmittel (6), das als Pressriemen ausgebildet oder aus einer Vielzahl von voneinander beabstandeten Pressrollen gebildet ist;
- zumindest eine Einrichtung zum Ummanteln eines in der Presskammer (5) gebildeten Rundballens mit einer Hülle; und
- eine Sensoreinrichtung,
**dadurch gekennzeichnet, dass**
die Sensoreinrichtung zumindest einen berührungslos arbeitenden Sensor (12) zum Bestimmen eines Durchmessers (D_{1,...,n}) des in der Presskammer (5) gebildeten Rundballens nach Verlassen der Presskammer (5) umfasst, der heckseitig an der Rundballenpresse (1) angeordnet ist.

2. Rundballenpresse (1) nach Anspruch 1, **dadurch gekennzeichnet, dass** die Rundballenpresse (1) eine Steuereinheit (14) umfasst, die mit dem zumindest einen Sensor (12) der Sensoreinrichtung zur Übertragung von Daten verbunden ist, wobei die Steuereinheit (14) dazu eingerichtet ist, den Durchmesser (D_{1,...,n}) des gebildeten Rundballens aus Messwerten des zumindest einen Sensors (12) zu bestimmen.

3. Rundballenpresse (1) nach Anspruch 2, **dadurch gekennzeichnet, dass** der zumindest eine Sensor (12) der Sensoreinrichtung dazu eingerichtet ist, einen ersten Messwert zu einem ersten Zeitpunkt (t₀) und mindestens einen zweiten Messwert zu mindestens einem zweiten Zeitpunkt (t_{1,...,n}) zu generieren, wobei der erste Messwert zum ersten Zeitpunkt einen Abstand (L₀) zwischen dem zumindest einen Sensor (12) und einem Referenzpunkt an der Ballenpresse (1) oder einer zu bearbeitenden landwirtschaftlichen Fläche und der mindestens eine zweite Messwert zum mindestens einen zweiten Zeitpunkt (t_{1,...,n}) einen Abstand (L_{1,...,n}) zwischen dem zumindest einen Sensor (12) und der Mantelfläche des gebildeten Rundballens repräsentiert, wobei die Steuereinheit (14) dazu eingerichtet ist, den Durchmesser (D_{1,...,n}) des gebildeten Rundballens aus der Differenz des ersten Messwerts zum ersten Zeitpunkt (t₀) und des mindestens einen zweiten Messwerts zum mindestens einen zweiten Zeitpunkt (t_{1,...,n}) zu bestimmen.

4. Rundballenpresse (1) nach Anspruch 2 oder 3, **dadurch gekennzeichnet, dass** die Steuereinheit (14) dazu eingerichtet ist, den Durchmesser (D_{1,...,n}) des gebildeten Rundballens mit einem vorabfestlegbaren Durchmesser (D₀) zu vergleichen und bei einer detektierten Abweichung des Durchmessers (D_{1,...,n}) des gebildeten Rundballens von dem vorabfestlegbaren Durchmesser (D₀) den Ballenbildungsvorgang beeinflussende Parameter der Rundballenpresse (1) und/oder einer landwirtschaftlichen Arbeitsmaschine, die mit der Rundballenpresse (1) koppelbar ist, und/oder Parameter der zumindest einen Einrichtung zum Ummanteln des in der Presskammer (5) gebildeten Rundballens einzustellen.

5. Rundballenpresse (1) nach einem der Ansprüche 1 bis 4, **dadurch gekennzeichnet, dass** die Bestimmung des Durchmessers (D_{1,...,n}) des gebildeten Rundballens automatisch erfolgt und zwar sobald die Auswurfklappe (4) ihre Öffnungsstellung eingenommen hat.

6. Rundballenpresse (1) nach einem der Ansprüche 1 bis 5, **dadurch gekennzeichnet, dass** der zumindest eine Sensor (12) der Sensoreinrichtung als Ultraschallsensor ausgebildet ist; und/oder die Sensoreinrichtung mindestens zwei berührungslos arbeitende Sensoren (12) umfasst, die voneinander in Querrichtung der Rundballenpresse (1) beabstandet und auf gleicher Höhe angeordnet sind.

7. Rundballenpresse (1) nach einem der Ansprüche 1 bis 6, **dadurch gekennzeichnet, dass** die Rundballenpresse (1) eine erste Einrichtung zum Ummanteln des in der Presskammer (5) gebildeten Rundballens mit einem Netz oder einer Folie umfasst, wobei die erste Einrichtung zum Ummanteln innerhalb des Pressengehäuses (2) angeordnet und dazu eingerichtet ist, den Rundballen in der Presskammer (5) mit dem Netz oder der Folie zu ummanteln.

8. Rundballenpresse (1) nach Anspruch 7, **dadurch gekennzeichnet, dass** der zumindest eine Sensor (12) der Sensoreinrichtung an der Auswurfklappe (4), vorzugsweise im Bereich einer sich in Querrichtung der Rundballenpresse erstreckenden Kante (17) der Auswurfklappe (4), angeordnet ist.

9. Rundballenpresse (1) nach Anspruch 8, **dadurch gekennzeichnet, dass** der Referenzpunkt durch einen Punkt einer den gebildeten Rundballen nach dem Verlassen der Presskammer (5) kontaktierenden Oberfläche einer Ballenrampe (18) der Rundballenpresse (1) oder der Referenzpunkt durch die zu bearbeitende landwirtschaftliche Arbeitsfläche unmittelbar hinter der Ballenrampe (18) der Rundballenpresse (1) gebildet ist.

10. Rundballenpresse (1) nach Anspruch 7, **dadurch gekennzeichnet, dass** die Rundballenpresse (1) eine zweite Einrichtung zum Ummanteln des in der Presskammer (5) gebildeten Rundballens mit einer Folie umfasst, wobei die zweite Einrichtung zum Ummanteln als eine Wickelvorrichtung (8) ausgebildet ist, die in einem Bereich hinter der Auswurfklappe (4) der Rundballenpresse (1) angeordnet und dazu eingerichtet ist, den gebildeten Rundballen nach Verlassen der Presskammer (5) mit der Folie zu ummanteln.

11. Rundballenpresse (1) nach Anspruch 10, **dadurch gekennzeichnet, dass** der zumindest eine Sensor (12) der Sensoreinrichtung an einer relativ zum Pressengehäuse (2) feststehenden Rahmenstruktur (10) der Wickelvorrichtung (8) angeordnet ist.

12. Rundballenpresse (1) nach Anspruch 11, **dadurch gekennzeichnet, dass** der Referenzpunkt durch einen Punkt einer den gebildeten Rundballen nach dem Verlassen der Presskammer (5) kontaktierenden Oberfläche eines Wickeltischs (9) der Wickelvorrichtung (8) gebildet ist.

13. Rundballenpresse (1) nach einem der Ansprüche 10 bis 12, **dadurch gekennzeichnet, dass** der zumindest eine Sensor (12) der Sensoreinrichtung dazu eingerichtet ist, während einer Bewegung des gebildeten Rundballens in der Wickelvorrichtung (8) eine Vielzahl von zweiten Messwerten zu einer Vielzahl von zweiten Zeitpunkten (t_{1,.,n}) zu erzeugen, wobei die Steuereinheit (14) dazu eingerichtet ist, aus der Vielzahl zweiter Messwerte du der Vielzahl zweiter Zeitpunkte (t_{1,...,n}) eine Zylindrizität (Z) und/oder einen mittleren Durchmesser (Dₘ) des Rundballens zu bestimmen.

14. Verfahren zum Bestimmen eines Durchmessers (D_{1,...,n}) eines in einer Presskammer (5) einer Rundballenpresse (1) nach einem der Ansprüche 1 bis 13 gebildeten Rundballens nach Verlassen der Presskammer (5),
**gekennzeichnet, durch** folgende Verfahrensschritte:
- Generieren eines ersten Messwerts zu einem ersten Zeitpunkt (t₀), wobei der erste Messwert zum ersten Zeitpunkt (t₀) einen Abstand (L₀) zwischen zumindest einem Sensor (12) einer Sensoreinrichtung der Rundballenpresse (1) und einem Referenzpunkt an der Rundballenpresse (1) oder einer zu bearbeitenden landwirtschaftlichen Fläche repräsentiert;
- Generieren mindestens eines zweiten Messwerts zu mindestens einem zweiten Zeitpunkt (t_{1,...,n}), wobei der mindestens eine zweite Messwert zum mindestens einen zweiten Zeitpunkt (t_{1,...,n}) einen Abstand (L_{1,...,n}) zwischen dem zumindest einen Sensor (12) der Sensoreinrichtung und der Mantelfläche des gebildeten Rundballens repräsentiert; und
- Bestimmen des Durchmessers (D_{1,...,n}) des gebildeten Rundballens nach Verlassen der Presskammer (5) aus einer Differenz des ersten Messwerts zum ersten Zeitpunkt (t₀) und des mindestens einen zweiten Messwerts zum mindestens einen zweiten Zeitpunkt (t_{1,...,n}).

15. Verfahren nach Anspruch 14, **gekennzeichnet, durch** folgende Verfahrensschritte:
- Vergleichen des Durchmessers (D_{1,...,n}) des gebildeten Rundballens mit einem vorabfestlegbaren Durchmesser (D₀); und
- Anpassen von den Ballenbildungsvorgang beeinflussenden Parametern der Rundballenpresse (1) und/oder einer landwirtschaftlichen Arbeitsmaschine, die mit der Rundballenpresse (1) koppelbar ist, und/oder Parametern zumindest einer Einrichtung zum Ummanteln des in der Presskammer (5) gebildeten Rundballens der Rundballenpresse (1) bei einer detektierten Abweichung des Durchmessers (D_{1,...,n}) des gebildeten Rundballens von dem vorabfestlegbaren Durchmesser (D₀).
